# EUROPEAN PATENT APPLICATION

(11) **EP 2 075 504 A1**
(43) Date of publication of application: **01.07.2009**
(21) Application number: 07829498.0
(22) Date of filing: 10.10.2007
(51) Int. Cl.: F21V 14/00, F21S 2/00, G03B 21/14, F21Y 101/02

(54) **LIGHT SOURCE DEVICE**

(30) Priority: 16.10.2006 JP 2006281505
(71) Applicant: Olympus Corporation, Tokyo 151-0072 (JP)
(72) Inventor: SUEOKA, Yoshiaki, Shibuya-ku Tokyo 1510072 (JP)
(74) Representative: von Hellfeld, Axel
(86) International application number: PCT/JP2007/069760
(87) International publication number: WO 2008/047645

(57) **Abstract**

A light source apparatus in which a light guide member is held reliably also in the configuration in which the light guide member is displaced. The light source apparatus (1) includes a plurality of light sources (2) arranged on an identical virtual circle (C), a rotary table (3) rotatable about an axial line (O) of the virtual circle (C), a drive unit (4) configured to rotate the rotary table (3), a light guide member (5) configured to guide alight emitted from the light sources (2), and a fixing member (6) configured to fix the light guide member (5) in a state in which an outgoing end (5a) is positioned at the center of the virtual circle (C), and an incoming end (5b) is directed radially outwardly of the virtual circle (C). The fixing member (6) includes supporting parts (11) which receive the light guide member (5) from the incoming end (5b) side to limit a movement of the light guide member (5) toward the incoming end (5b).

## Description

### Technical Field

The present invention relates to a light source apparatus configured to use by introducing a light emitted by a light source to a predetermined position by a light guide member.

### Background Art

As a light source apparatus as described above, for example, an illuminating apparatus described in Patent Citation 1 described later is known. The illuminating apparatus includes a light-emitting member, a light guide unit (taper rod) for conducting light emitted by the light-emitting member, and a holding unit that holds the light-emitting member and the light guide unit integrally.

Patent Citation 1: Japanese Unexamined Patent Application, Publication No. 2004-93623

### Disclosure of Invention

The present inventers invented a light source apparatus of a new configuration as a result of study and development of the light source apparatus. The new light source apparatus includes a plurality of light sources, a single light guide member, and a drive unit configured to displace the lightguide member.
In this light source apparatus, the light source to be illuminated is switches in sequence from among the plurality of light sources, and the light guide member is displaced by the drive unit so that an incoming end of the light guide member faces the illuminated light source all the time.

For example, in this light source apparatus described above, the respective light sources are arranged on an identical virtual circle, and the light source to be illuminated is switched to an adjacent light source in sequence in the circumferential direction of the virtual circle. This light source apparatus includes a rotary table which is able to rotate about an axis of the virtual circle.
The light guide member is mounted to the rotary table with an outgoing end positioned at the center of the virtual circle and the incoming end directed radially outwardly of the virtual circle. The drive unit is configured to cause the incoming end of the light guide member to rotate about the outgoing end by rotating the rotary table about the axis of the virtual circle. Accordingly, the light guide member faces at the incoming end to the respective light sources in sequence without changing the position of the outgoing end.
In addition, the rotational velocity of the rotary table is synchronized with the switching velocity of the light sources to be illuminated. Accordingly, the incoming end of the light guide member faces the illuminated light source all the time, and hence light is supplied to the light guide member all the time.

In this light source apparatus as described above, the respective light sources are not illuminated all the time, but are illuminated and extinguished repeatedly. Therefore, in this light source apparatus, the illuminated period of each light source is short, so that the load on the each light source is alleviated. For example, when LEDs (Light Emitting Diodes) are employed as the light source, overheating of the light source is prevented. Therefore, in this light source a power to be supplied to the light source when illuminating the light source may be increased in comparison with that in the related art, so that the luminance of the light source is enhanced, and the brighter illumination light is obtained.

In this light source apparatus, the light guide member is displaced in association with the switching of the light source to be illuminated as described above. For example, in the example shown above in detail, the light guide member is rotated about the outgoing end. At this time, since an inertia force acts on the light guide member, reliable fixation of the light guide member with respect to the rotary table may be required.
However, Patent Citation 1 discloses only the holding unit of the light guide member in the case in which the light guide member is not displaced. In other words, the technology disclosed in Patent Citation 1 is not on the basis of the assumption such that the light guide member is held under the condition of being displaced and hence being acted upon by an inertia force. Therefore, even though the technology disclosed in Patent Citation 1 is simply applied to the light source apparatus in which the light guide member is displaced, the reliable fixation of the light guide member with respect to the rotary table is not necessarily achieved.

In view of such circumstances as described above, it is an object of the invention to provide a light source apparatus in which fixation of a light guide member with respect to a rotary table is ensured even in a configuration in which the light guide member is displaced.

In order to achieve the above-described object, the invention proposes the following apparatus shown below.
The invention provides a light source apparatus including a plurality of light sources arranged on an identical virtual circle, a rotary table rotatable about an axial line of the virtual circle; a drive unit configured to rotate the rotary table; a light guide member guiding light emitted from the light source; and a fixing member configured to fix the light guide member to the rotary table in a state in which an outgoing end is positioned at a center of the virtual circle, and an incoming end faces radially outwardly of the virtual circle, in which the fixing member includes a supporting part configured to receive the light guide member from the incoming end side and limits a movement of the light guide member toward the incoming end side.

In this configuration, when the rotary table is rotated by the drive unit, a centrifugal force acts on the light guide member fixed on the rotary table toward the incoming end side. In other words, a force to cause the light guide member to move toward the incoming end side acts upon the light guide member when the rotary table is rotated by the drive unit.
In the light source apparatus, the light guide member is fixed to the rotary table by the fixing member. The fixing member includes the supporting part which receives the light guide member from the incoming end side to limit the movement of the light guide member toward the incoming end side.
In other words, in the light source apparatus, even when a force to cause the light guide member to move toward the incoming end side acts on the light guide member, the light guide member is received by the supporting part, so that the movement of the light guide member toward the incoming end side is limited, and hence the fixation of the light guide member with respect to the rotary table is ensured.

Preferably, the light guide member has an inclined surface in which the distance to an optical axis of the light guide member is increased gradually from the incoming end side toward the outgoing end side, and the supporting part receives the inclined surface.
In this configuration, the supporting part receives the inclined surface of the light guide member.
The inclined surface is an inclined surface of the light guide member inclined in the direction in which the distance to the optical axis is increased gradually from the incoming end side to toward the outgoing end side. Therefore, even when a force to cause the light guide member to move toward the incoming end side acts on the light guide member, the inclined surface of the light guide member is received by the supporting part, so that the movement of the light guide member toward the incoming end side is limited. In this configuration, the fixation of the light guide member with respect to the rotary table is ensured.
In the light source apparatus employing the configuration in which the supporting part receives the inclined surface, the fixing member is able to fix the light guide member in a state in which the incoming end surface of the light guide member is released, light emitted from the light sources is efficiently taken from the incoming end surface of the light guide member, thereby achieving a high illuminating efficiency.

Here, the light guide member may be configured in such a manner that only a part of the side surfaces thereof is an inclined surface, and also the entire side surface may be formed into an inclined surface as in the case of a conical shape or a pyramid shape.
The light guide member may be configured in such a manner that at least side surfaces positioned on the opposite sides with the intermediary of the optical axis from among the side surfaces are inclined surfaces, respectively, and the fixing member may be formed with a pair of supporting parts corresponding respectively to the pair of inclined surfaces. In this case, since the light guide member is supported by the supporting parts so as to be clamped from both sides with the intermediary of the optical axis, and hence the further secure support of the light guide member is ensured.

Preferably, the light guide member has an inclined surface in which the distance to the optical axis of the light guide member is increased gradually from the incoming end side toward the outgoing end side, and the supporting part receives a ridge formed by the intersection between the inclined surface and a surface adjacent thereto.
The inclined surface of the light guide member is an inclined surface in which the distance to the optical axis is increased gradually from the incoming end side toward the outgoing end side. Therefore, the ridge formed by the intersection between the inclined surface and the surface adjacent thereto of the light guide member is inclined so that the distance to the optical axis is increased gradually from the incoming end side toward the outgoing end side.
The supporting part receives the ridge. Therefore, even when a force to cause the light guide member to move toward the incoming end side acts on the light guide member, the ridge of the light guide member is received by the supporting part, so that the movement of the light guide member toward the incoming end side is limited. Accordingly, in this configuration, the fixation of the light guide member with respect to the rotary table is ensured.
The supporting part is in line contact with the light guide member, and the contact surface is smaller than the case of the surface contact. Normally, the reflection coefficient is lowered at the contact portion between the light guide member and the supporting part. However, by reducing the contact surface between the light guide member and the supporting part as described above, the light guide member having a high optical efficiency is achieved.

In the light source apparatus, the fixing member is able to fix the light guide member in a state in which the incoming end surface of the light guide member is released, light emitted from the light sources is efficiently taken from the incoming end surface of the light guide member, thereby achieving a high illuminating efficiency. In the light source apparatus, the fixing member is able to fix the light guide member in a state in which portions of the side surfaces of the light guide member other than the ridge is released, light emitted from the light sources is efficiently taken from the incoming end surface of the light guide member, thereby achieving a high illuminating efficiency.

In this case as well, the light guide member may be configured in such a manner that only a part of the side surfaces thereof is an inclined surface, and also the entire side surface may be formed into an inclined surface.
The light guide member may be configured in such a manner that at least side surfaces positioned on the opposite sides with the intermediary of the optical axis from among the side surfaces are inclined surfaces, respectively, and the fixing member may be formed with a pair of supporting parts corresponding respectively to the ridge formed by the pair of inclined surfaces. In this case, since the light guide member is supported by the supporting parts so as to be clamped from both sides with the intermediary of the optical axis, and hence the further secure support of the light guide member is ensured.

When the centrifugal force acts on the light guide member provided on the rotary table, the centrifugal force acting on the light guide member may act on the adhered portion which is located closer to the rotational axis with respect to the position of the center of gravity of the light guide member as a force in the direction to move the outgoing end side of the light guide member away from the rotary table depending on the supporting structure of the light guide member.
Therefore, by employing the configuration to support a portion of the light guide member apart from the rotary table with respect to the center of gravity of the light guide member in the axial direction of the virtual circle in the supporting part, the centrifugal force acting on the light guide member does not acts as the force to move the outgoing end side of the light guide member away from the rotary table, so that the fixation of the light guide member is further stabilized.

Preferably, the supporting part receives a portion of the light guide member on the side of the rotational center of the rotary table with respect to the center of gravity of the light guide member.
In this manner, by employing the configuration to receive the portion of the light guide member on the side of the rotational center of the rotary table with respect to the center of gravity of the light guide member in the supporting part, the centrifugal force acting on the light guide member does not act as the force to move the outgoing end side of the light guide member away from the rotary table, so that the fixation of the light guide member is further stabilized.

Preferably, the rotary table is provided with a counterweight against the light guide member on the opposite side of the position of installation of the light guide member with the intermediary of the rotational center.
In this case, by the provision of the counterweight on the rotary table, the weight of the rotary table on both sides of the rotational center is kept in balance. In this configuration, the rotation of the rotary table is stabilized, and the rotation of the light guide member is accurately synchronized with the timing to switch the illumination of the light source.

Preferably, the supporting part is provided on the counterweight.
In this case, the centrifugal force acts also on the counter weight when the rotary table is rotated. The direction of the centrifugal force acting on the counterweight is opposite from that of the centrifugal force acting on the light guide member. Therefore, when the rotary table is rotated, the supporting part provided on the counterweight pulls the light guide member on the opposite direction from the centrifugal force acting on the light guide member. The more the centrifugal force acting on the light guide member increases, the more the centrifugal force acting on the counterweight increases as well.
Accordingly, in this configuration, the movement of the light guide member toward the incoming end side is effectively limited irrespective of the magnitude of the centrifugal force acting on the light guide member, so that the fixation of the light guide member with respect to the rotary table is satisfactorily achieved.

Preferably, the supporting part receives the peripheral edge portion of the incoming end of the light guide member.
In this case, the fixation of the light guide member is achieved irrespective of the shape of the light guide member.

Preferably, the respective light sources are faced so that optical axes are directed toward the center of the virtual circle, the light guide member has the incoming end formed into a plane orthogonal to radial direction of the virtual circle, and the supporting part receives an area of the peripheral edge portion of the incoming end of the light guide member positioned in the axial direction of the virtual circle.
In this case, the supporting part is not provided in a front area in terms of the direction of rotation of the rotary table and a back area in terms of the direction of rotation thereof in the peripheral edge portion of the incoming end of the light guide member. In other words, the supporting part supports the portion of the incoming end of the light guide member avoiding the area opposing the area where the light sources are located.
In this configuration, since the interference between the light sources and the supporting part is avoided, increase in luminous energy incoming from the light sources to the light guide member is achieved by bringing the incoming end of the light guide member and the light sources into proximity, so that improvement of the lighting efficiency is achieved.

Preferably, the rotary table is provided with a recess for storing the light guide member, and the rotary table by itself constitutes the supporting part.
In this configuration, since the light guide member is stored in the recess of the rotary table, an air resistance applied to the light guide member and the rotary table by the rotation of the light guide member is reduced in comparison with the case in which the light guide member is exposed on the rotary table.
Accordingly, the wind noise generated when the light guide member is rotated is reduced, so that quiet is improved. Also, the load applied to the drive unit due to the air resistance is reduced.
Since the rotary table by itself constitutes the supporting parts, the number of components of the light source apparatus is reduced, and reduction of the manufacturing cost is achieved in comparison with the case in which the supporting parts is provided separately from the rotary table.

In this case, by setting the weight distributions of the respective portions of the rotary table to keep both sides of the rotational center of the rotary table in balance in the state in which the light guide member is stored in the recess, the rotation of the rotary table is stabilized without using the counterweight, so that the rotation of the light guide member is adequately synchronized with the timing to switch the illumination of the light sources.

Preferably, the supporting part is a transparent panel being provided on the rotary table and receiving the entire incoming end surface of the light guide member by one of the surfaces thereof.
In this case, the fixation of the light guide member is achieved irrespective of the shape of the light guide member. Furthermore, since the supporting part is formed of the transparent panel, incoming of light from the light sources to the light guide member is not hindered, so that the lowering of the lighting efficiency is prevented.

Preferably, the supporting part includes a film holder provided on the rotary table on the side of the rotational center with respect to the incoming end of the light guide member, and a transparent film held by the film holder and wound from the film holder over the incoming end of the light guide member.
In this case, the fixation of the light guide member is achieved irrespective of the shape of the light guide member. Furthermore, since the supporting part is formed of the transparent film, incoming of light from the light sources to the light guide member is not hindered, so that the lowering of the lighting efficiency is prevented.

Preferably, the rotary table may be provided with a counterweight against the light guide member on the opposite side of the position of installation of the light guide member with the intermediary of the rotational center, and the counterweight constitutes the film holder.
In this case, when the rotary table is rotated, a centrifugal force acting on the counterweight acts on the transparent film which constitutes the supporting part. Since the direction of the centrifugal force acting on the counterweight is opposite from the centrifugal force acting on the light guide member, the transparent film pulls the light guide member in the direction opposite from the centrifugal force acting on the light guide member. The more the centrifugal force acting on the light guide member increases, the more the centrifugal force acting on the counterweight increases as well.
Accordingly, the movement of the light guide member toward the incoming end side is effectively limited irrespective of the magnitude of the centrifugal force acting on the light guide member, so that the fixation of the light guide member with respect to the rotary table is satisfactorily achieved.
The fixation of the light guide member is achieved irrespective of the shape of the light guide member. Furthermore, since the supporting part is formed of the transparent film, incoming of light from the light sources to the light guide member is not hindered, so that the lowering of the lighting efficiency is prevented.

Preferably, the side surface of the light guide member is formed with an engaging recess or an engaging projection, and the supporting part includes any one of the engaging projection which engages the engaging recess of the light guide member, the engaging projection which engages the engaging projection of the light guide member, and the engaging recess which engages the engaging projection of the light guide member.
In this case, the fixation of the light guide member is achieved irrespective of the shape of the light guide member.

Preferably, the optical axes of the respective light source are directed in one axial direction of the virtual circle, the incoming end of the light guide member reaches a portion facing the respective light sources, the incoming end includes a triangle prism having an incoming end surface directed to face the respective light sources and a reflecting surface reflecting light incoming from the incoming end surface toward the center of the virtual circle, and the supporting part receives the reflecting surface.
In this case, the fixing member is able to fix the light guide member in a state in which the incoming end surface of the light guide member is released, light emitted from the light sources is efficiently taken from the incoming end surface of the light guide member, thereby achieving a high illuminating efficiency.

According to the present invention, the light guide member is held reliably also in the configuration in which the light guide member is displaced.

### Brief Description of Drawings

[FIG. 1] FIG. 1 is a plan view showing a configuration of a light source apparatus according to a first embodiment of the invention.
[FIG. 2] FIG. 2 is a vertical cross-sectional view showing the configuration of the light source apparatus according to the first embodiment of the invention.
[FIG. 3] FIG. 3 is a plan view showing a configuration of a light source apparatus according to a second embodiment of the invention.
[FIG. 4] FIG. 4 is a vertical cross-sectional view showing the configuration of the light source apparatus according to the second embodiment of the invention.
[FIG. 5] FIG. 5 is a plan view showing a configuration of a light source apparatus according to a third embodiment of the invention.
[FIG. 6] FIG. 6 is a vertical cross-sectional view showing the configuration of the light source apparatus according to the third embodiment of the invention.
[FIG. 7] FIG. 7 is a plan view showing a configuration of a light source apparatus according to a fourth embodiment of the invention.
[FIG. 8] FIG. 8 is a vertical cross-sectional view showing the configuration of the light source apparatus according to the fourth embodiment of the invention.
[FIG. 9] FIG. 9 is a plan view showing a configuration of a light source apparatus according to a fifth embodiment of the invention.
[FIG. 10] FIG. 10 is a vertical cross-sectional view showing the configuration of the light source apparatus according to the fifth embodiment of the invention.
[FIG. 11] FIG. 11 is a perspective view showing the configuration of the light source apparatus according to the fifth embodiment of the invention.
[FIG. 12] FIG. 12 is a cross-sectional view taken along the line A-A in FIG. 9
[FIG. 13] FIG. 13 is a plan view showing a configuration of a light source apparatus according to a sixth embodiment of the invention.
[FIG. 14] FIG. 14 is a vertical cross-sectional view showing the configuration of the light source apparatus according to the sixth embodiment of the invention.
[FIG. 15] FIG. 15 is a perspective view showing the configuration of the light source apparatus according to the sixth embodiment of the invention.
[FIG. 16] FIG. 16 is a plan view showing a configuration of a light source apparatus according to a seventh embodiment of the invention.
[FIG. 17] FIG. 17 is a vertical cross-sectional view showing the configuration of the light source apparatus according to the seventh embodiment of the invention.
[FIG. 18] FIG. 18 is a plan view showing a configuration of a light source apparatus according to an eighth embodiment of the invention.
[FIG. 19] FIG. 19 is a vertical cross-sectional view showing the configuration of the light source apparatus according to the eighth embodiment of the invention.
[FIG. 20] FIG. 20 is a plan view showing a configuration of a light source apparatus according to a ninth embodiment of the invention.
[FIG. 21] FIG. 21 is a vertical cross-sectional view showing the configuration of the light source apparatus according to the ninth embodiment of the invention.
[FIG. 22] FIG. 22 is a plan view showing a configuration of a light source apparatus according to a tenth embodiment of the invention.
[FIG. 23] FIG. 23 is a vertical cross-sectional view showing the configuration of the light source apparatus according to the tenth embodiment of the invention.
[FIG. 24] FIG. 24 is a plan view showing a configuration of a light source apparatus according to an eleventh embodiment of the invention.
[FIG. 25] FIG. 25 is a vertical cross-sectional view showing the configuration of the light source apparatus according to the eleventh embodiment of the invention.
[FIG. 26] FIG. 26 is a plan view showing a configuration of a light source apparatus according to a twelfth embodiment of the invention.
[FIG. 27] FIG. 27 is a vertical cross-sectional view showing the configuration of the light source apparatus according to the twelfth embodiment of the invention.
[FIG. 28] FIG. 28 is a plan view showing a configuration of a light source apparatus according to a thirteenth embodiment of the invention.
[FIG. 29] FIG. 29 is a vertical cross-sectional view showing the configuration of the light source apparatus according to the thirteenth embodiment of the invention.
[FIG. 30] FIG. 30 is a plan view showing a configuration of a light source apparatus according to a fourteenth embodiment of the invention.
[FIG. 31] FIG. 31 is a vertical cross-sectional view showing the configuration of the light source apparatus according to the fourteenth embodiment of the invention.

### Explanation of Reference:

- 1, 21, 31, 41, 51, 61, 71, 81,:
- 91, 101, 111, 121, 131, 141:: light source apparatus
- 2:: light source
- 3, 63:: rotary table
- 4:: drive unit
- 5, 25, 35, 45, 75, 125, 135, 145:: light guide member
- 5c:: inclined surface
- 5d:: incoming end surface
- 5f:: reflecting surface
- 6:: fixing member
- 11, 32, 43, 52, 65, 76, 86:: supporting part
- 42:: counterweight
- 64:: recess
- 96:: transparent panel (supporting part)
- 106a:: film holder
- 106b:: transparent film (supporting part)
- 126:: engaging recess
- 127,: 137: engaging projection
- C:: virtual circle
- G:: center of gravity
- O:: axial line
- R:: ridge

### Best Mode for Carrying Out the Invention

Referring now to the drawings, embodiments of the invention will be described.

### First Embodiment

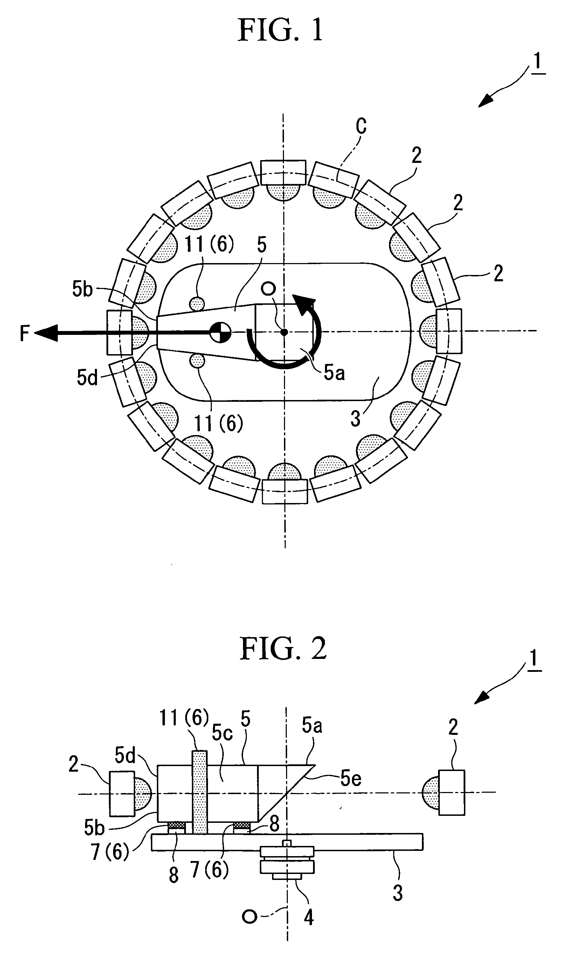

A light source apparatus 1 according to a first embodiment is used, for example, as a light source for an illuminating apparatus or a light source for a projector.
As shown in FIGS. 1 and 2, the light source apparatus 1 includes a plurality of light sources 2 arranged on an identical virtual circle C, a rotary table 3 rotatable about an axial line O of the virtual circle C (see FIG. 1), a drive unit 4 configured to rotate the rotary table 3, a light guide member 5 configured to guide light emitted from the light sources 2, and a fixing member 6 configured to fix the light guide member 5 to the rotary table 3 in a state in which an outgoing end 5a is positioned at the center of the virtual circle C, and an incoming end 5b is directed radially outwardly of the virtual circle C.

In the first embodiment, the respective light sources 2 include LEDs (Light Emitting Diodes). The light sources 2 are arranged substantially equidistantly around the axial line O with optical axes thereof directed toward the center of the virtual circle C.
The rotary table 3 is a substantially rectangular plate-type member and is provided inside the virtual circle C in parallel with a plane formed by the virtual circle C at a position offset with respect to the light sources 2 in the direction of the axial line O (in a state of being shifted in position in the direction of the axial line O with respect to the light sources 2). Ends of the rotary table 3 in terms of the longitudinal direction are formed into an arcuate shape having a center corresponding to the rotational center of the rotary table 3. Accordingly, the ends of the rotary table 3 in terms of the longitudinal direction is brought into a maximum proximity to the respective light sources 2 while avoiding interference with the respective light sources 2.

The drive unit 4 employed here is an electric motor having a drive shaft coaxially with the axial line O of the virtual circle C. A motor body of the electric motor is fixed an apparatus body, not shown, and the drive shaft thereof is connected to the center position (longitudinal and widthwise center position) of the rotary table 3.
Accordingly, when the electric motor is driven, the rotary table 3 is rotated about the axial line O of the virtual circle C.

Provided on the rotary table 3 at a position opposing the optical axis of the light sources 2 is the light guide member 5.
The light guide member 5 is a tapered rod having inclined surfaces 5c inclined in such a manner that the distance from the optical axis (center of the optical axis) of the light guide member 5 is increased gradually from the incoming end 5b side toward the outgoing end 5a side. In the first embodiment, the light guide member 5 includes a pair of side surfaces substantially orthogonal to the axial line O of the virtual circle C (a side surface opposing the rotary table 3 and a side surface facing the opposite side from the rotary table 3) and a pair of side surfaces substantially parallel to the axial line O (a side surface directed forward in terms of the direction of rotation of the rotary table 3 and a side surface facing rearward in terms of the direction of rotation of the rotary table 3). The light guide member 5 is a tapered rod having a substantially square shape in cross section and, from among the four side surfaces, only the side surface facing forward in terms of the direction of rotation of the rotary table 3 and the side surface which faces rearward in terms of the direction of rotation thereof are the inclined surfaces 5c. An incoming end surface 5d of the light guide member 5 is substantially orthogonal to the optical axis of the light guide member 5, and an outgoing end surface faces the opposite side from the side where the rotary table 3 is located in the direction of the axial line O of the virtual circle C. The outgoing end 5a of the light guide member 5 includes a triangle prism having a reflecting surface 5e which reflects light incoming from the incoming end 5b into the light guide member 5 in the direction opposite from the rotary table 3 in the direction of the axial line O of the virtual circle C.

Provided between the light guide member 5 and the rotary table 3 is adhesive agent layers 7 as the fixing members 6, and the light guide member 5 is fixedly adhered to the rotary table 3 by the adhesive agent layers 7. In the first embodiment, projections 8 are provided on the rotary table 3 at a portion opposing the light guide member 5, and the adhesive agent layers 7 are provided on the projections 8.
The adhesive agent layers 7 are provided on the incoming end 5b side and the outgoing end 5a side with the intermediary of the position of the center of gravity of the light guide member 5.

The light source apparatus 1 is provided with supporting parts 11 that receives the light guide member 5 from the incoming end 5b side and limits the movement of the light guide member 5 to the incoming end 5b side as the fixing members 6.
In the first embodiment, the supporting parts 11 are column-shaped members provided on the rotary table 3 so as to project in substantially parallel to the axial line O of the virtual circle C. The supporting parts 11 receive the inclined surfaces 5c of the light guide member 5.

In the light source apparatus 1, the respective light sources 2 are arranged on the identical virtual circle C. The light sources 2 are controlled in its operation by a control device, not shown, and the control device is configured to switch the light source 2 to be illuminated to the next light source 2 adjacent in the circumferential direction of the virtual circle C.
The light guide member 5 is configured in such a manner that the incoming end 5b is rotated about the axial line O by the rotary table 3 being rotated about the axial line O of the virtual circle C by the drive unit 4.
Accordingly, the light guide member 5 faces at the incoming end 5b to the respective light sources 2 in sequence without changing the center position of the outgoing end 5a. In addition, the rotational velocity of the rotary table 3 is synchronized with the velocity of switching the light source 2 to be illuminated, so that the incoming end 5b of the light guide member 5 faces the illuminating light source 2 all the time. Accordingly, the light is supplied to the light guide member 5 all the time.

When the light guide member 5 is rotated, a centrifugal force F acts on the light guide member 5.
In other words, a force to cause the light guide member 5 to move toward the incoming end 5b side acts upon the light guide member 5 when the rotary table 3 is rotated by the drive unit 4.
In the light source apparatus 1, the light guide member 5 is fixed to the rotary table 3 by the fixing members 6. The fixing members 6 includes the supporting parts 11 which receive the light guide member 5 from the incoming end 5b side to limit the movement of the light guide member 5 toward the incoming end 5b side.

In the light source apparatus 1, the supporting parts 11 receive the inclined surfaces 5c of the light guide member 5.
The inclined surfaces 5c are inclined surfaces of the light guide member 5 inclined in the direction in which the distance to the optical axis is increased gradually from the incoming end 5b toward the outgoing end 5a side. Therefore, even when a force to cause the light guide member 5 to move toward the incoming end 5b side acts on the light guide member 5, the inclined surfaces 5c of the light guide member 5 are received by the supporting parts 11, so that the movement of the light guide member 5 toward the incoming end 5b side is limited.
In other words, in the light source apparatus 1, even when a force to cause the light guide member 5 to move toward the incoming end 5b side acts on the light guide member 5, the light guide member 5 are received by the supporting parts 11, so that the movement of the light guide member 5 toward the incoming end 5b side is limited, and hence the fixation of the light guide member 5 with respect to the rotary table 3 is ensured.

From among side surfaces of the light guide member 5, the side surface facing forward in terms of the direction of rotation of the rotary table 3 and the side surface facing rearward in terms of the direction of rotation thereof correspond respectively to inclined surfaces 5c, and the inclined surfaces 5c are received by the supporting parts 11, respectively. In other words, since the light guide member 5 is supported by the supporting parts 11 so as to be clamped from both sides with the intermediary of the optical axis, and hence the further secure support of the light guide member is ensured.
In the light source apparatus 1, the fixing members 6 are able to fix the light guide member 5 in a state in which the incoming end surface 5d of the light guide member 5 is released, light emitted from the light sources 2 is efficiently taken from the incoming end surface 5d of the light guide member 5, thereby achieving a high illuminating efficiency.

The light guide member 5 may be configured to have only part of the side surfaces of the light guide member 5 as the inclined surfaces 5c as in the first embodiment, or may be configured to have the entire side surfaces as the inclined surfaces 5c like a conical shape or a pyramid shape.

### Second Embodiment

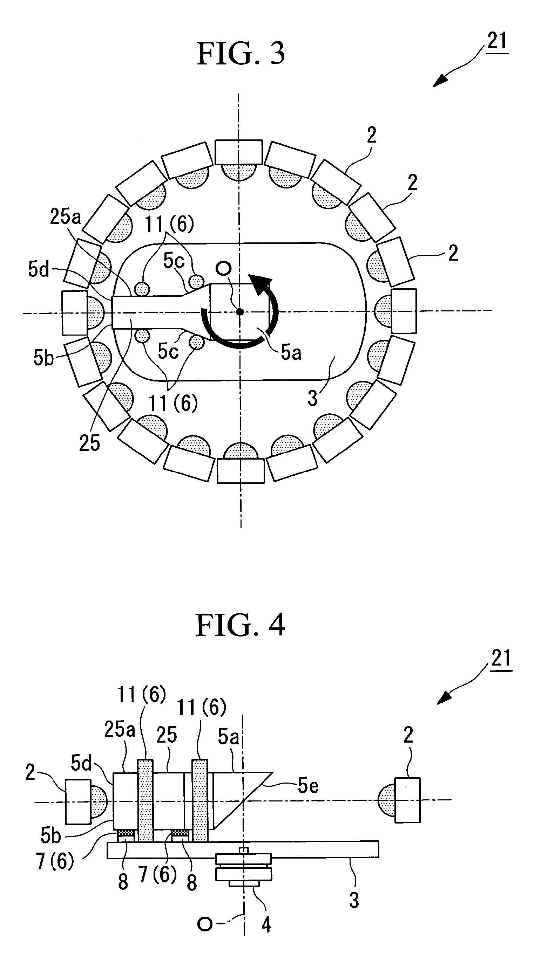

Referring now to FIGS. 3 and 4, a second embodiment of the invention will be descried.
A light source apparatus 21 according to the second embodiment is distinctively different from the light source apparatus 1 described in the first embodiment mainly in that a light guide member 25 is provided instead of the light guide member 5.
In the following description, the components same as or similar to those in the first embodiment are designated by the same reference numerals and detailed description is omitted.

In the light guide member 25, only part of the side surface facing forward in terms of the direction of rotation of the rotary table 3 in the light guide member 5 described in the first embodiment and the surface facing rearward in terms of the direction of rotation thereof are formed into the inclined surfaces 5c.
More specifically, the light guide member 25 has a rectangular column-shaped portion 25a having a constant cross section in the vicinity of the incoming end 5b, and areas on the side surface facing forward in terms of the direction of rotation of the rotary table 3 and the side surface facing rearward in terms of the direction of rotation thereof from the rectangular column-shaped portion 25a to the outgoing end 5a are formed respectively with inclined surfaces 5c.

In the light source apparatus 21, supporting parts 11 provided so as to clamp the rectangular column-shaped portion 25a of the light guide member 25 from both sides with the intermediary of the optical axis are provided in addition to the supporting parts 11 which receives the inclined surfaces 5c as the fixing members 6. Accordingly, the light guide member 25 is supported at a plurality of points in the direction of the optical axis, so that the support of the light guide member 25 is ensured.

### Third Embodiment

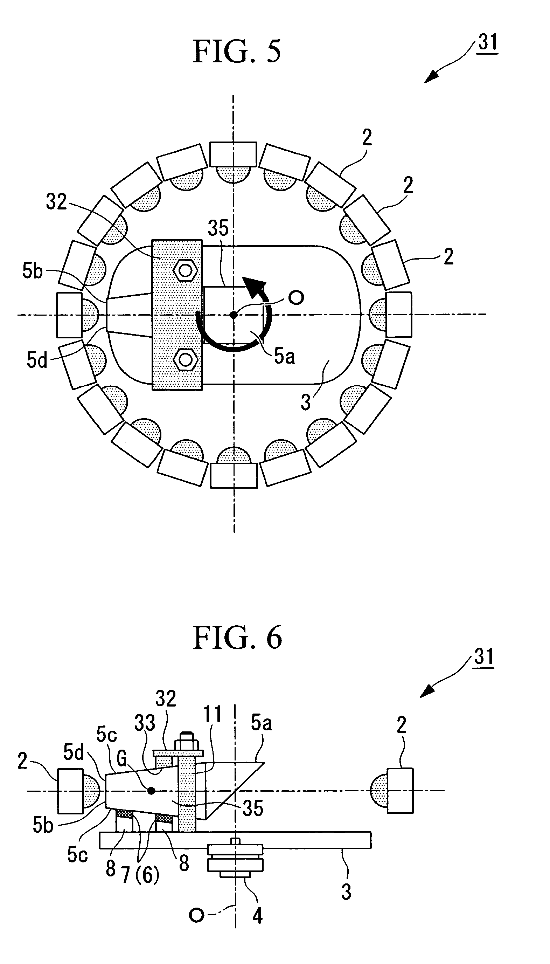

Referring now to FIGS. 5 and 6, a third embodiment of the invention will be described.
A light source apparatus 31 is distinctively different from the light source apparatus 1 described in the first embodiment mainly in that a light guide member 35 is employed instead of light guide member 5 and a supporting part 32 which is bridged between distal ends of the supporting parts 11 so as to clamp the light guide member 35 between the supporting parts 11 and the rotary table 3.
In the following description, the components same as or similar to those in the first embodiment are designated by the same reference numerals and detailed description is omitted.

In the light guide member 35, all of four side surfaces in the light guide member 5 described in the first embodiment are formed into the inclined surfaces 5c.
The supporting part 32 is a plate-shaped member bridged between distal ends of the supporting parts 11.
The supporting part 32 is detachably attached to the supporting parts 11 by bolts or the like. The supporting part 32 is configured to clamp and secure the light guide member 35 between the supporting parts 11 and the rotary table 3 by being attached to the supporting parts 11 in a state of interposing the light guide member 35 between the supporting parts 11 and the rotary table 3.
In the supporting part 32, an abutment portion 33 which receives the inclined surfaces 5c of the light guide member 35 is provided in the projecting state at a portion opposing the light guide member 35. The distal end surface of the abutment portion 33 is formed into an inclined surface substantially in parallel with the inclined surface 5c of the light guide member 35, which is received by the abutment portion 33, in the state of being supported by the supporting part 32. Accordingly, when the supporting part 32 receives the inclined surface 5c of the light guide member 35, the abutment portion 33 comes into surface contact with the inclined surfaces 5c, and the light guide member 35 is supported stably.

A plurality of the projections 8 are provided on the rotary table 3 along the optical axis of the light guide member 35 installed on the rotary table 3. In the third embodiment, the two projections 8 are arranged on the rotary table 3 at a distance along the direction of the optical axis of the light guide member 35 in the state of being installed on the rotary table 3. The projections 8 each have an inclined surface on the distal end thereof, and the projection 8 on the side of the incoming end of the light guide member 35 projects more from the rotary table 3. In addition, the distal end surfaces of the projections 8 are inclined surfaces which are substantially in parallel with the inclined surface 5c of the light guide member 35 which faces the projections 8 in a state of being placed on the rotary table 3.
Accordingly, when the supporting part 32 receives the inclined surface 5c of the light guide member 35, the projecting portions 8 receive the inclined surface 5c by the surfaces via the adhesive agent layers 7, and hence the light guide member 35 is supported stably.

When the centrifugal force acts on the light guide member 35 provided on the rotary table 3, the centrifugal force acting on the light guide member 35 may act on the adhered portion which is located closer to the rotational axis with respect to the position of the center of gravity of the light guide member 35 as a force in the direction to move the outgoing end side of the light guide member 35 away from the rotary table 3 depending on the supporting structure of the light guide member 35.
Therefore, in the third embodiment, the supporting part 32 is configured to support a portion of the light guide member 35 being apart from a center of gravity G in the direction of the axial line O of the virtual circle C with respect to the rotary table 3.
Accordingly, the centrifugal force acting on the light guide member 35 does not act as a force to move the outgoing end 5a side of the light guide member 35 away from the rotary table 3, so that the fixation of the light guide member 35 is further stabilized.

In the third embodiment, the supporting parts 11 and 32 are configured to receive the portion of the light guide member 35 on the side of the rotational center of the rotary table 3 with respect to the center of gravity G.
In this manner, by configuring the supporting parts 11 and 32 to receive the portion of the light guide member 35 on the side of the rotational center of the rotary table 3 with respect to the center of gravity G, the centrifugal force acting on the light guide member 35 does not act as a force to move the outgoing end 5a side of the light guide member 35 away from the rotary table 3, so that the fixation of the light guide member 35 is further stabilized.

### Fourth Embodiment

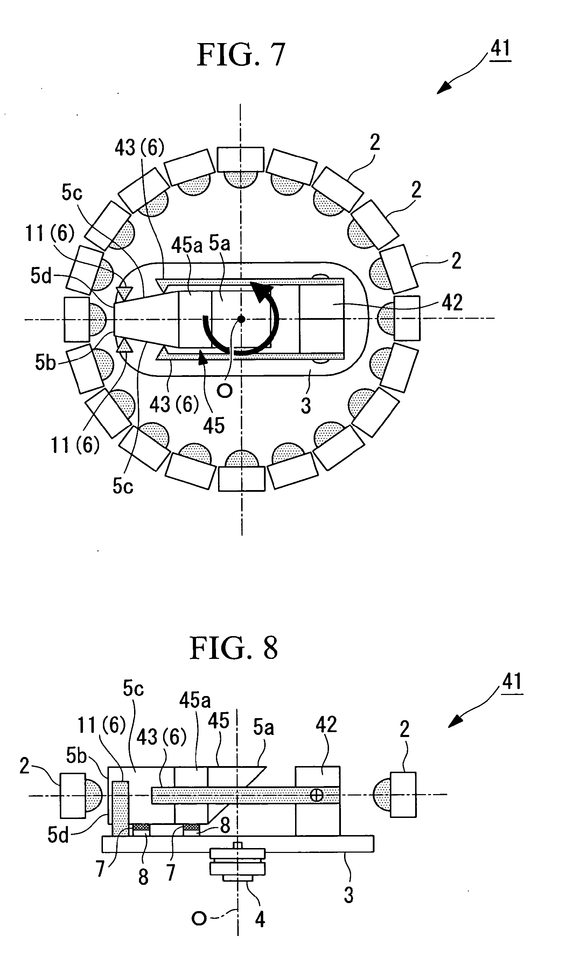

Referring now to FIGS. 7 and 8, a fourth embodiment of the invention will be described.
A light source apparatus 41 according to the fourth embodiment is distinctively different from the light source apparatus 1 described in the first embodiment mainly in that a light guide member 45 is used as the light guide member, a counterweight 42 for the light guide member 45 is provided on the rotary table 3, and supporting parts 43 are provided in addition to the supporting parts 11.
In the following description, the components same as or similar to those in the first embodiment are designated by the same reference numerals and detailed description is omitted.

The light guide member 45 includes a parallel portion 45a whose peripheral surface extends substantially in parallel with the axial line of the light guide member between the areas where the inclined surfaces 5c are formed and the outgoing end 5a of the light guide member 5 described in the first embodiment.
The counterweight 42 is provided on the opposite side of the position of installation of the light guide member 45 with the intermediary of the center of rotation on the rotary table 3.
Accordingly, since the rotary table 3 is kept in weight balance between the both sides of the center of rotation, the rotation of the rotary table 3 is stabilized, so that the rotation of the light guide member 45 is adequately synchronized with the timing to switch the illumination of the light sources 2.

The supporting parts 43 includes arms extending from the counterweight 42 across the center of rotation of the rotary table 3 to the incoming end 5b side of the light guide member 45.
In the fourth embodiment, the supporting parts 43 and the supporting parts 11 come into contact with adjacent side surfaces of the light guide member 45, respectively.
The supporting parts 43 and the supporting parts 11 each includes a ridge line which extends substantially in parallel with the axial line O at a contact point with the light guide member 45. Accordingly, the supporting parts 43 and the supporting parts 11 come into line contact with the light guide member 45 by these ridge portions, so that the holding force is higher than the case of the surface contact with respect to the light guide member 45.

In the light source apparatus 41 configured as described above, when the rotary table 3 is rotated, the centrifugal force acts also on the counterweight 42. The direction of the centrifugal force acting on the counterweight 42 is opposite from that of the centrifugal force acting on the light guide member 45. Therefore, when the rotary table 3 is rotated, the supporting parts 43 provided on the counterweight 42 pulls the light guide member 45 on the opposite direction from the centrifugal force acting on the light guide member 45. The more the centrifugal force acting on the light guide member 45 increases, the more the centrifugal force acting on the counterweight 42 (that is, the force that the supporting parts 43 pulls the light guide member 45) increases as well.
Accordingly, the movement of the light guide member 45 toward the incoming end 5b side is effectively limited irrespective of the magnitude of the centrifugal force acting on the light guide member 45, so that the fixation of the light guide member 45 with respect to the rotary table 3 is satisfactorily achieved.

### Fifth Embodiment

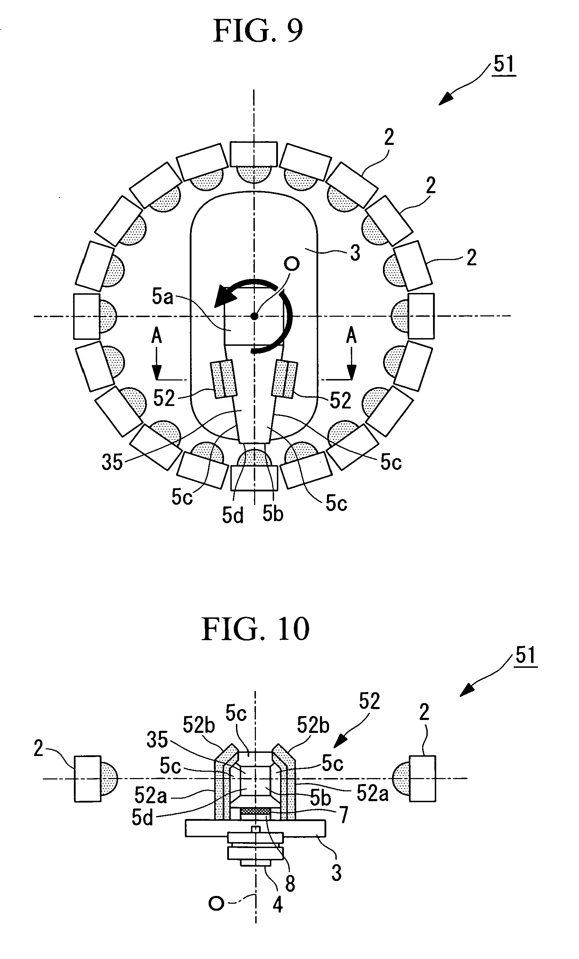

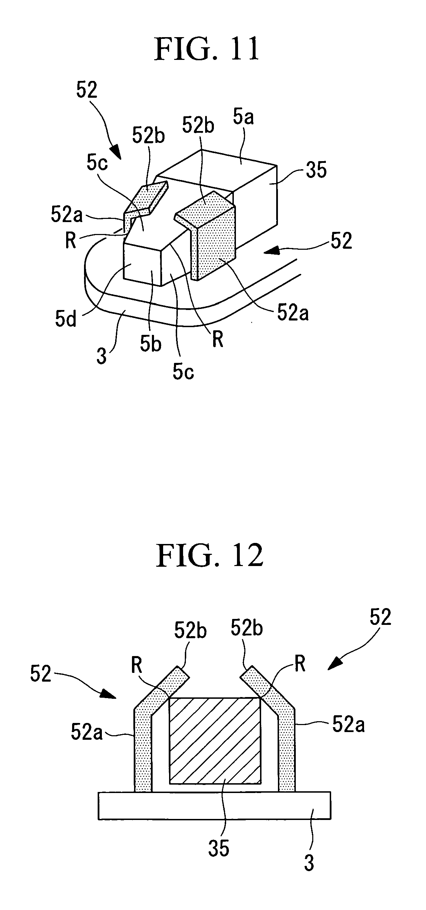

Referring now to FIGS. 9 to 12, a fifth embodiment of the invention will be described.
A light source apparatus 51 according to the fifth embodiment is distinctively different from the light source apparatus 31 described in the third embodiment mainly in that a supporting part 52 is provided instead of the supporting part 11 and the supporting part 32.
In the following description, the components same as or similar to those in the third embodiment are designated by the same reference numerals and detailed description is omitted.

The supporting part 52 is a pair of wall-type members provided on the rotary table 3 so as to clamp the light guide member 35 from both sides in terms of the direction of rotation of the rotary table 3.
The supporting part 52 includes a base portions 52a provided in substantially parallel with the inclined surfaces 5c facing the direction of rotation of the rotary table 3 from among the inclined surfaces 5c of the light guide member 35, and inclined portions 52c provided at distal ends of the base portions 52a and extending to the inclined surface 5c side facing opposite from the rotary table 3 from among the inclined surfaces 5c of the light guide member 35.
As shown in FIGS. 9 to 12, the inclined portion 52c receives ridges R formed at the intersections between the inclined surface 5c facing the direction opposite from the rotary table 3 and the inclined surfaces 5c adjacent thereto from among the inclined surfaces 5c of the light guide member 35.

The inclined surfaces 5c of the light guide member 35 are inclined surfaces in which the distance to the optical axis is increased gradually from the incoming end 5b toward the outgoing end side 5a. Therefore, the ridges R at which the inclined surface 5c and the inclined surfaces 5c adjacent thereto of the light guide member 35 are inclined in the direction in which the distance to the optical axis is increased gradually from the incoming end 5b toward the outgoing end 5a.
Since the supporting part 52 receives the ridges R, even when a force to move the light guide member 35 toward the incoming end 5b side acts on the light guide member 35, the ridges R of the light guide member 35 is received by the supporting part 52 and the movement of the light guide member 35 toward the incoming end 5b side is limited, the fixation of the light guide member 35 with respect to the rotary table 3 is ensured.

In the light source apparatus 51, the supporting parts 52 are able to fix the light guide member 35 in a state in which the incoming end surface 5d of the light guide member 35 is released, light emitted from the light sources 2 is efficiently taken from the incoming end surface 5d of the light guide member 35, thereby achieving a high illuminating efficiency. In the light source apparatus 51, the supporting part 52 is able to fix the light guide member 35 in a state in which portions of the side surfaces of the light guide member 35 other than the ridges R are released. In other words, the supporting part 52 is in line contact with the light guide member 35, and the contact surface is smaller than the case of the surface contact.
Normally, the reflection coefficient is lowered at the contact portion between the light guide member and the supporting part. However, by reducing the contact surface, the light guide member having a high optical efficiency is achieved.
In the fifth embodiment, a configuration in which only part of the side surfaces of the light guide member 35 are formed into the inclined surfaces 5c is also applicable.

### Sixth Embodiment

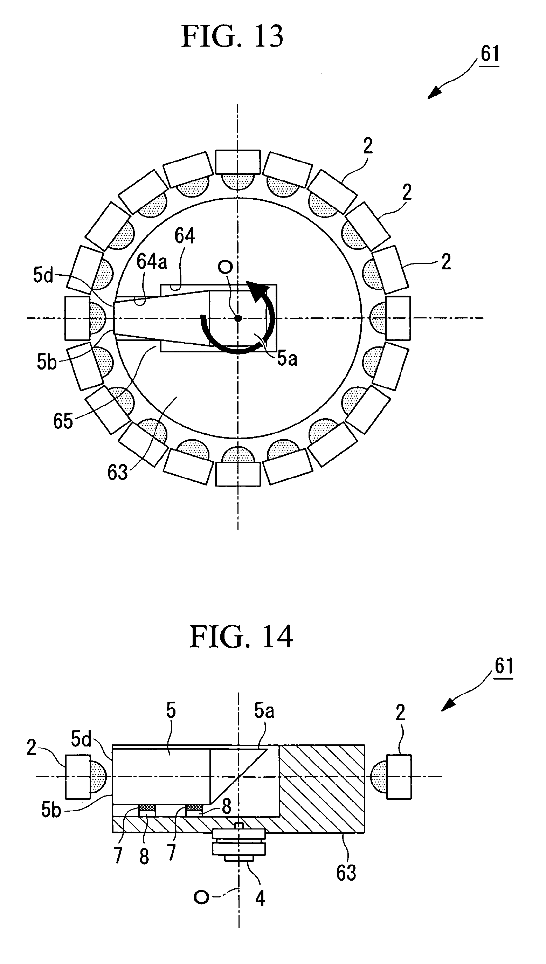

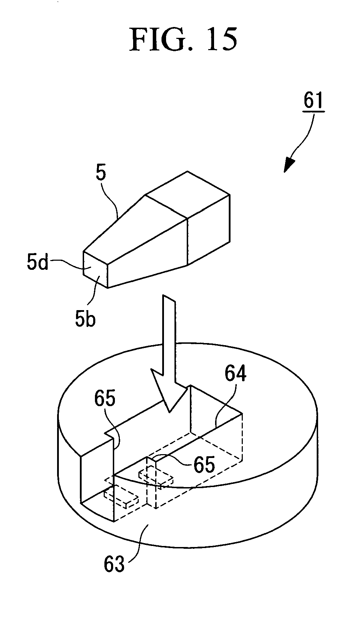

Referring now to FIGS. 13 to 15, a sixth embodiment of the invention will be described.
A light source apparatus 61 according to the sixth embodiment is distinctively different from the light source apparatus 1 described in the first embodiment mainly in that a rotary table 63 is provided instead of the rotary table 3.
In the following description, the components same as or similar to those in the first embodiment are designated by the same reference numerals and detailed description is omitted.

The rotary table 63 has a disc shape having a thickness larger than the thickness of the light guide member 5, and has a recess 64 for storing the light guide member 5 on the side where the light guide member 5 is to be mounted, so that the rotary table 63 by itself constitutes supporting parts 65.
The recess 64 is formed into a groove shape extending from the rotational center of the rotary table 63 toward the peripheral edge. In the recess 64, a portion in the vicinity of the peripheral portion of the rotary table 63 (that is, the portion where the incoming end 5b of the light guide member 5 is stored) is reduced in width. In the recess 64, shoulders formed at the position where the width is changed constitute the supporting parts 65 that receive the inclined surfaces 5c of the light guide member 5.

In the light source apparatus 61, since the light guide member 5 is stored in the recess 64 of the rotary table 63, an air resistance applied to the light guide member 5 and the rotary table 63 by the rotation of the light guide member 5 is reduced in comparison with the case in which the light guide member 5 is exposed on the rotary table 63.
Accordingly, a wind noise generated when the light guide member 5 is rotated is reduced, so that quiet is improved. Also, the load applied to the drive unit 4 due to the air resistance is reduced.
Since the rotary table 63 by itself constitutes the supporting parts 65, the number of components of the light source apparatus 61 is reduced, and reduction of the manufacturing cost is achieved in comparison with the case in which the supporting parts 65 is provided separately from the rotary table 63.
In the sixth embodiment, the weight distributions of the respective portions of the rotary table 3 are set to keep both sides of the rotational center of the rotary table 63 in balance in the state in which the light guide member 5 is stored in the recess 64. Accordingly, the rotation of the rotary table 63 is stabilized without using the counterweight, so that the rotation of the light guide member 5 is adequately synchronized with the timing to switch the illumination of the light sources 2.

### Seventh Embodiment

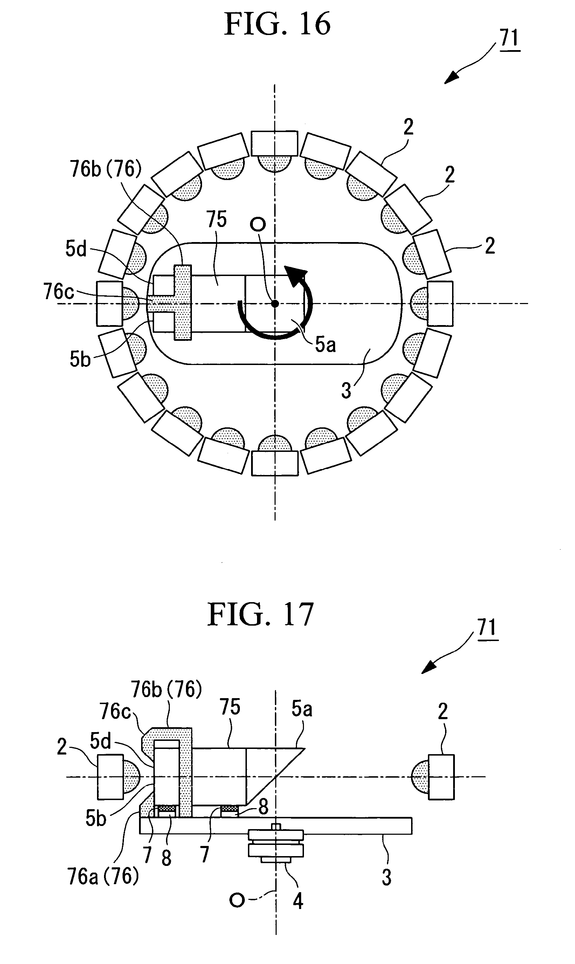

Referring now to FIGS. 16 to 17, a seventh embodiment of the invention will be described.
A light source apparatus 71 according to the seventh embodiment is distinctively different from the light source apparatus 1 described in the first embodiment mainly in that a supporting part 76 is provided instead of the supporting parts 11.
In the seventh embodiment, a light guide member 75 is used instead of the light guide member 5.
In the following description, the components same as or similar to those in the first embodiment are designated by the same reference numerals and detailed description is omitted.

The light guide member 75 does not include the inclined surfaces 5c in the light guide member 5 described in the first embodiment, and is formed into a square pole shape from the incoming end 5b to the outgoing end 5a.
The supporting part 76 includes a first supporting part 76a provided on the rotary table 3 at a portion opposing an edge of the incoming end surface 5d of the light guide member 75 on the side of the rotary table 3 and a second supporting part 76b extending upright from the rotary table 3 so as to surround the periphery near the incoming end 5b of the light guide member 75.

The first supporting part 76a has a configuration to receive the edge of the incoming end surface 5d of the light guide member 75 on the side of the rotary table 3.
The second supporting part 76b includes a protruded portion 76c protruding from the side surface of the light guide member 75 which faces the opposite side from the rotary table 3 toward the incoming end 5b side of the light guide member 75 and receiving the edge portion of the incoming end surface 5d of the light guide member 75 on the opposite side from the rotary table 3.

In the light source apparatus 71 configured as described above, since the supporting part 76 receives the peripheral edge portion of the incoming end surface 5d of the light guide member 75, fixation of the light guide member 75 is achieved irrespective of the shape of the light guide member 75.

The supporting part 76 receives an area located in the direction of the axial line O of the virtual circle C out of the peripheral edge portion of the incoming end 5b of the light guide member 75. In other words, the supporting part 76 is not provided in a front area in terms of the direction of rotation of the rotary table 3 and a back area in terms of the direction of rotation thereof in the peripheral edge portion of the incoming end 5b of the light guide member 75, and supports the incoming end 5b of the light guide member 75 at portions avoiding the area opposing the area where the light sources 2 are located.
Accordingly, since the interference between the light sources 2 and the supporting part 76 is avoided, increase in luminous energy incoming from the light sources 2 to the light guide member 75 is achieved by bringing the incoming end 5b of the light guide member 75 and the light sources 2 into proximity, so that improvement of the lighting efficiency is achieved.

### Eighth Embodiment

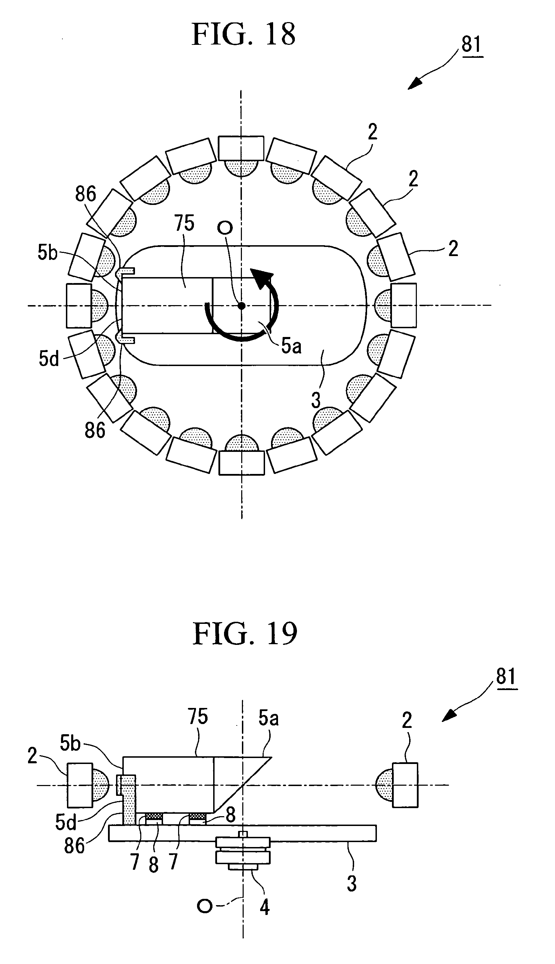

Referring now to FIGS. 18 to 19, an eighth embodiment of the invention will be described.
A light source apparatus 81 according to the eighth embodiment is distinctively different from the light source apparatus 71 described in the seventh embodiment mainly in that supporting parts 86 are provided instead of the supporting parts 76.
In the following description, the components same as or similar to those in the seventh embodiment are designated by the same reference numerals and detailed description is omitted.

The supporting parts 86 are arranged on the rotary table 3 on both sides of the light guide member 75 with the intermediary of the optical axis. One of the pair of the supporting parts 86 receives a front edge portion of the incoming end surface 5d of the light guide member 75 in terms of the direction of rotation of the rotary table 3 and the other supporting part 86 receives a rear edge portion thereof in terms of the direction of rotation of the rotary table 3.

In the light source apparatus 81 configured as described above, since the supporting parts 86 receive the peripheral edge portion of the incoming end surface 5d of the light guide member 75, fixation of the light guide member 75 is achieved irrespective of the shape of the light guide member 75.
Since the light guide member 75 is supported by the supporting parts 86 so as to be clamped from both sides with the intermediary of the optical axis, and hence the further secure support of the light guide member 75 is ensured.

### Ninth Embodiment

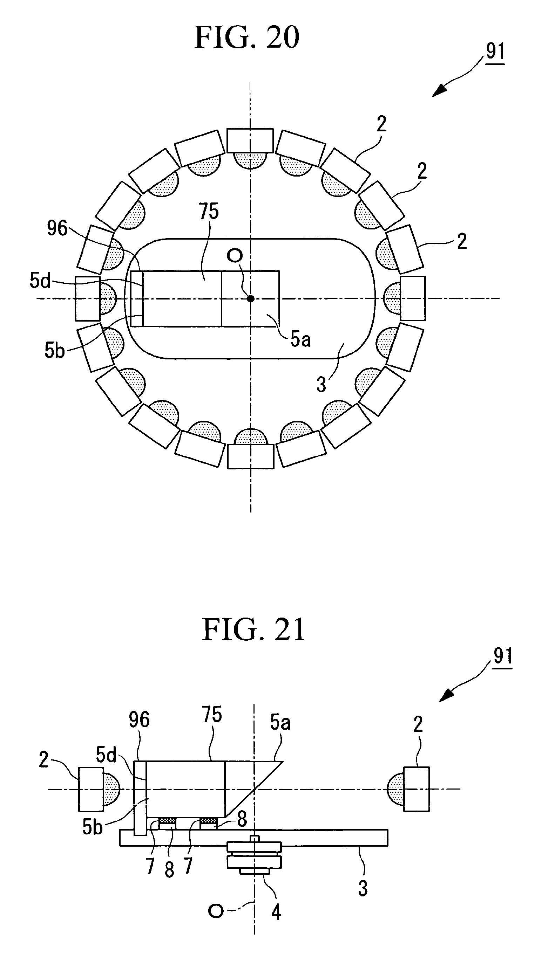

Referring now to FIGS. 20 to 21, a ninth embodiment of the invention will be described.
A light source apparatus 91 according to the ninth embodiment is distinctively different from the light source apparatus 81 described in the eighth embodiment mainly in that a supporting part 96 is provided instead of the supporting parts 86.
In the following description, the components same as or similar to those in the eighth embodiment are designated by the same reference numerals and detailed description is omitted.

The supporting part 96 is formed of a transparent panel provided on the rotary table 3 so as to extend from a position radially outwardly of the incoming end 5b side of the light guide member 75 upright so as to oppose the incoming end 5b.
The supporting part 96 supports the light guide member 75 by receiving the entire incoming end surface 5d of the light guide member 75 by one of the surfaces thereof.

In the light source apparatus 91, the fixation of the light guide member 75 is achieved irrespective of the shape of the light guide member 75. Furthermore, since the supporting part 96 is formed of the transparent panel, incoming of light from the light sources 2 to the light guide member 75 is not hindered, so that the lowering of the lighting efficiency is prevented.

### Tenth Embodiment

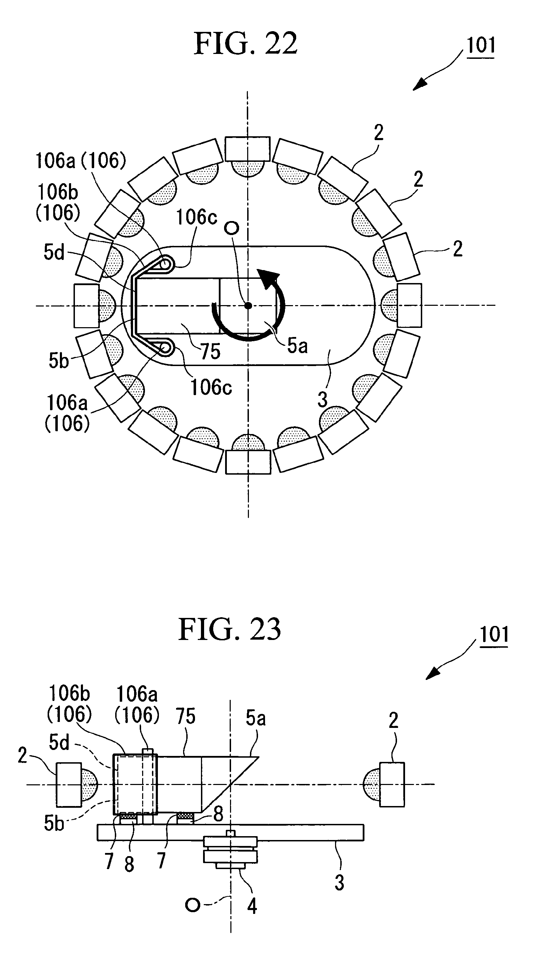

Referring now to FIGS. 22 to 23, a tenth embodiment of the invention will be described.
A light source apparatus 101 according to the tenth embodiment is distinctively different from the light source apparatus 81 described in the eighth embodiment mainly in that a supporting part 106 is provided instead of the supporting parts 86.
In the following description, the components same as or similar to those in the eighth embodiment are designated by the same reference numerals and detailed description is omitted.

The supporting part 106 includes a pair of film holders 106a provided on the rotary table 3 on the side of the rotational center with respect to the incoming end of the light guide member 75, and a transparent film 106b held by the film holders 106a and wound from the film holders 106a over the incoming end of the light guide member 75.
In the tenth embodiment, the film holders 106a are arranged with the intermediary of the light guide member 75 therebetween, and are formed of rod members provided on the rotary table 3 in substantially parallel with the axial line O of the virtual circle C.
The transparent film 106b is a band-shape film formed with loops 106c on both ends and is held with the respective loops 106c hooked on the film holders 106a corresponding thereto.

In the light source apparatus 106, the fixation of the light guide member 75 is achieved irrespective of the shape of the light guide member 75. Furthermore, since the supporting part 106 is formed of the transparent film, incoming of light from the light sources 2 to the light guide member 75 is not hindered, so that the lowering of the lighting efficiency is prevented.

### Eleventh Embodiment

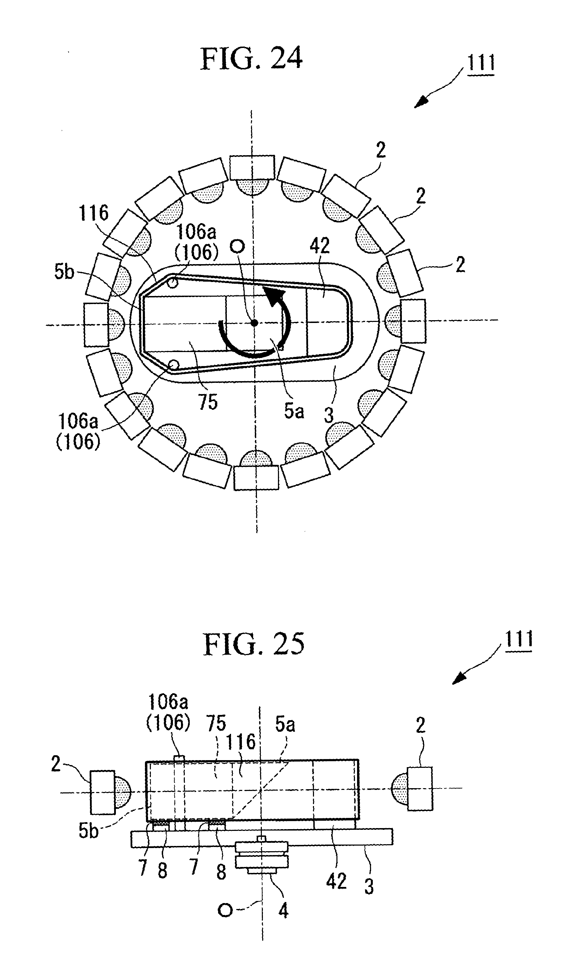

Referring now to FIGS. 24 to 25, an eleventh embodiment of the invention will be described.
A light source apparatus 111 according to the eleventh embodiment is distinctively different from the light source apparatus 101 described in the tenth embodiment mainly in that a counterweight 42 is provided on the rotary table 3, and an endless band-shaped transparent film 116 extending so as to be wound around the incoming end of the light guide member 75, the film holders 106a, and the counterweight 42 is employed instead of the transparent film 106b.

In the light source apparatus 111 configured as described above, since the counterweight 42 is provided on the rotary table 3, both sides of the rotary table 3 with respect to the rotational center are kept in weight balance. Accordingly, the rotation of the rotary table 3 is stabilized, and the rotation of the light guide member 75 is accurately synchronized with the timing to switch the illumination of the light source 2.

The direction of the centrifugal force acting on the counterweight 42 is opposite from the centrifugal force acting on the light guide member 75. Therefore, when the rotary table 3 is rotated, the transparent film 116 wound around the counterweight 42 pulls the light guide member 75 in the opposite direction from the centrifugal force acting on the light guide member 75. The more the centrifugal force acting on the light guide member 75 increases, the more the centrifugal force acting on the counterweight 42 (that is, the force that the supporting parts 43 pulls the light guide member 75) increases as well.
Accordingly, the movement of the light guide member 75 toward the incoming end 5b side is effectively limited irrespective of the magnitude of the centrifugal force acting on the light guide member 75, so that the fixation of the light guide member 75 with respect to the rotary table 3 is satisfactorily achieved.

### Twelfth Embodiment

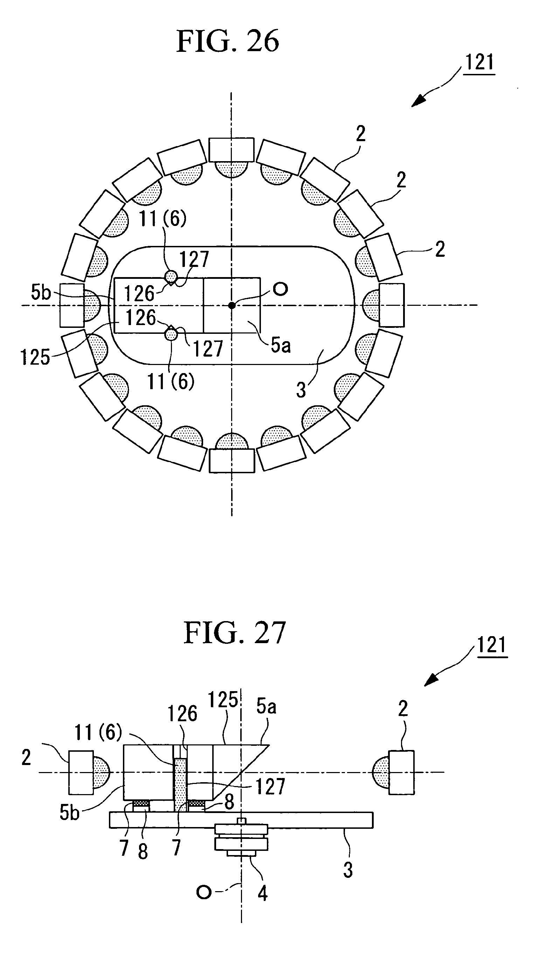

Referring now to FIGS. 26 to 27, a twelfth embodiment of the invention will be described.
A light source apparatus 121 according to the twelfth embodiment is distinctively different from the light source apparatus 1 described in the first embodiment mainly in that a light guide member 125 is provided instead of the light guide member 5.
In the following description, the components same as or similar to those in the first embodiment are designated by the same reference numerals and detailed description is omitted.

The light guide member 125 does not include the inclined surfaces 5c in the light guide member 5 described in the first embodiment, and is formed into a square pole shape in cross section from the incoming end 5b to the outgoing end 5b. Furthermore, the light guide member 125 is provided with engaging recesses 126 respectively on the side surface facing forward in terms of the direction of rotation of the rotary table 3 and the side surface facing rearward in terms of the direction of rotation thereof.
In the twelfth embodiment, the engaging recesses 126 are formed of inner surfaces of V-grooves extending in parallel with the axial line of the virtual circle C.
Side surfaces of the column shaped supporting parts 11 constitute engaging projections 127 which engage the engaging recesses 126.

In the light source apparatus 121, since the rotary table 3 and the light guide member 125 are fixed by the engagement between the engaging recesses 126 and the engaging projections 127, the fixation of the light guide member 125 is achieved irrespective of the shape of the light guide member 125.

### Thirteenth Embodiment

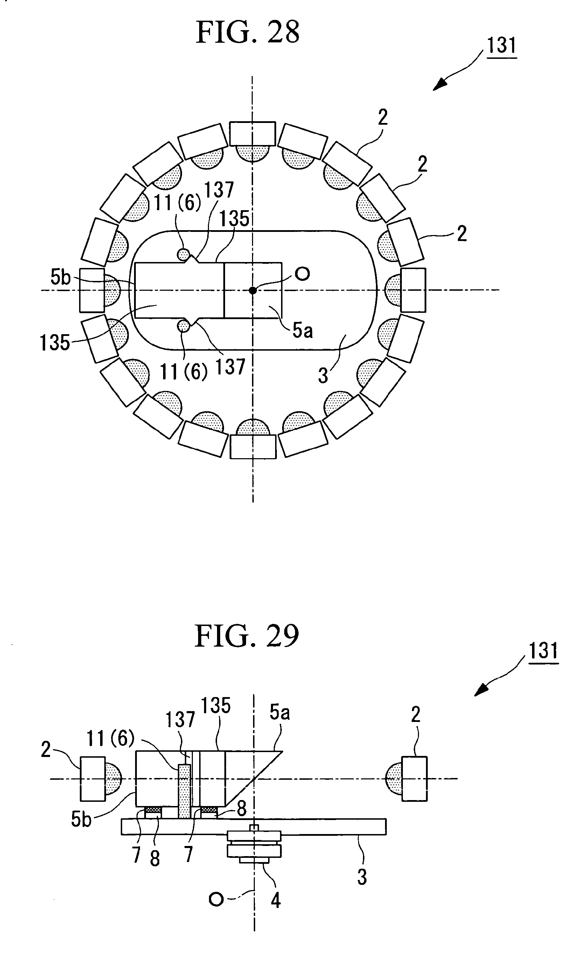

Referring now to FIGS. 28 to 29, a thirteenth embodiment of the invention will be described.
A light source apparatus 131 according to the thirteenth embodiment is distinctively different from the light source apparatus 1 described in the first embodiment mainly in that a light guide member 135 is provided instead of the light guide member 5.
In the following description, the components same as or similar to those in the first embodiment are designated by the same reference numerals and detailed description is omitted.

The light guide member 135 does not include the inclined surfaces 5c in the light guide member 5 described in the first embodiment, and is formed into a square pole shape in cross section from the incoming end 5b to the outgoing end 5b. Furthermore, the light guide member 135 is provided engaging projections 136 respectively on the side surface facing forward in terms of the direction of rotation of the rotary table 3 and the side surface facing rearward in terms of the direction of rotation thereof.
In the thirteenth embodiment, the engaging projections 136 are configured by projections having V-shape in cross section and extending in the direction parallel to the axial line of the virtual circle C.
The side surfaces of the column shaped supporting parts 11 constitute engaging projections 137 which engage the engaging projections 136.

In the light source apparatus 131, since the rotary table 3 and the light guide member 135 are fixed by the engagement between the engaging projections 136 and the engaging projections 137, the fixation of the light guide member 135 is achieved irrespective of the shape of the light guide member 135.

### Fourteenth Embodiment

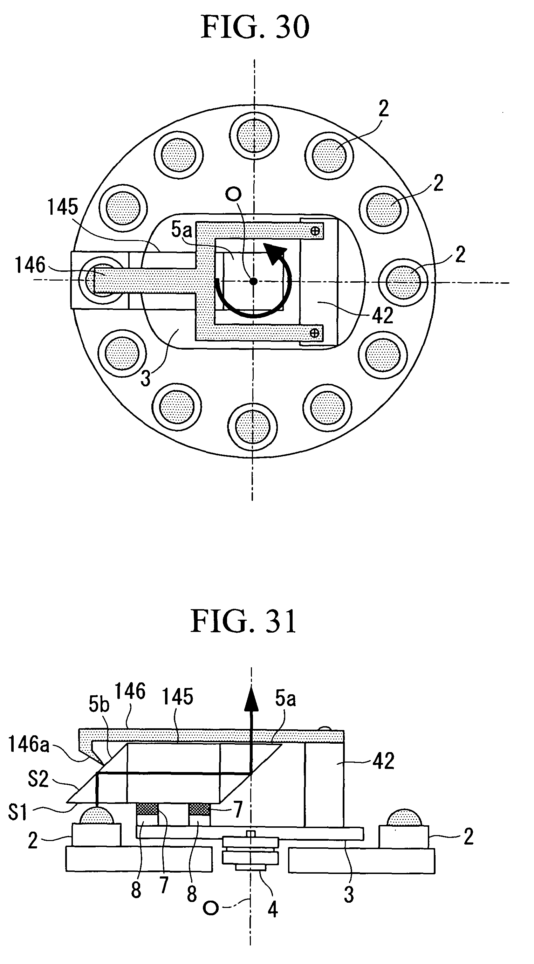

Referring now to FIGS. 30 to 31, a fourteenth embodiment of the invention will be described.
A light source apparatus 141 according to the fourteenth embodiment is distinctively different from the light source apparatus 1 described in the first embodiment mainly in that the optical axes of the light sources 2 are directed in one axial direction of the virtual circle C, a light guide member 145 is provided instead of the light guide member 5, and a supporting part 146 is provided instead of the supporting parts 11.
The counterweight 42 is provided on the rotary table 3.
The supporting parts 146 includes arms extending from the projecting end of the counterweight 42 to a reflecting surface S2 of the light guide member 145 avoiding the center of rotation of the rotary table 3.
A claw 146a is provided at an end of the supporting part 146 on the reflecting surface S2 side for receiving the reflecting surface S2. The supporting part 146 is bifurcated at the connecting end with the counterweight 42, thereby receiving the reflecting surface S2 of the light guide member 145 while exposing the outgoing end of the light guide member 145.

The light guide member 145 is configured of a triangle prism having the incoming end 5b, the incoming end surface 5d facing the direction opposing the respective light sources 2, and a reflecting surface 5f reflecting the incoming light from the incoming end surface 5d to the center of the virtual circle C, and the inclined surfaces 5c of the light guide member 5 is eliminated therefrom.

In this case, since the fixing member is able to fix the light guide member 145 in a state in which the incoming end surface 5d of the light guide member 145 is released, light emitted from the light sources 2 is efficiently taken from the incoming end surface 5d of the light guide member 145, thereby achieving a high illuminating efficiency.

## Claims

1. A light source apparatus comprising:
a plurality of light sources arranged on an identical virtual circle, a rotary table rotatable about an axial line of the virtual circle;
a drive unit configured to rotate the rotary table;
a light guide member guiding light emitted from the light source; and
a fixing member configured to fix the light guide member to the rotary table in a state in which an outgoing end is positioned at a center of the virtual circle and an incoming end faces radially outwardly of the virtual circle,
wherein the fixing member includes a supporting part configured to receive the light guide member from the incoming end side and limits a movement of the light guide member toward the incoming end side.

2. The light source apparatus according to Claim 1, wherein the light guide member has an inclined surface in which the distance to an optical axis of the light guide member is increased gradually from the incoming end side toward the outgoing end side, and
the supporting part receives the inclined surface.

3. The light source apparatus according to Claim 1, wherein the light guide member has an inclined surface in which the distance to the optical axis of the light guide member is increased gradually from the incoming end side toward the outgoing end side and
the supporting part receives a ridge formed by the intersection between the inclined surface and a surface adjacent thereto.

4. The light source apparatus according to any one of Claims 1 to 3, wherein the supporting part supports a portion of the light guide member apart from the rotary table with respect to the center of gravity of the light guide member in the axial direction of the virtual circle.

5. The light source apparatus according to any one of Claims 1 to 4, wherein the supporting part receives a portion of the light guide member on the side of the rotational center of the rotary table with respect to the center of gravity of the light guide member.

6. The light source apparatus according to any one of Claims 1 to 5, wherein the rotary table is provided with a counterweight against the light guide member on the opposite side of the position of installation of the light guide member with the intermediary of the rotational center.

7. The light source apparatus according to Claim 6, wherein the supporting part is provided on the counterweight.

8. The light source apparatus according to Claim 1, wherein the supporting part receives the peripheral edge portion of the light guide member of the incoming end of the light guide member.

9. The light source apparatus according to Claim 8, wherein the respective light sources are faced so that optical axes are directed toward the center of the virtual circle, the light guide member has the incoming end formed into a plane orthogonal to radial direction of the virtual circle, and the supporting part receives an area of the peripheral edge portion of the incoming end of the light guide member positioned in the axial direction of the virtual circle.

10. The light source apparatus according to any one of Claims 1 to 7, wherein the rotary table is provided with a recess for storing the light guide member, and the rotary table by itself constitutes the supporting part.

11. The light source apparatus according to Claim 1, wherein the supporting part is a transparent panel being provided on the rotary table and receiving the entire incoming end surface of the light guide member by one of the surfaces thereof.

12. The light source apparatus according to Claim 1, wherein the supporting part includes a film holder provided on the rotary table on the side of the rotational center with respect to the incoming end of the light guide member, and a transparent film held by the film holder and wound from the film holder over the incoming end of the light guide member.

13. The light source apparatus according to Claim 12, wherein the rotary table may be provided with a counterweight against the light guide member on the opposite side of the position of installation of the light guide member with the intermediary of the rotational center, and the counterweight constitutes the film holder.

14. The light source apparatus according to Claim 1, wherein the side surface of the light guide member is formed with an engaging recess or an engaging projection, and
the supporting part includes any one of the engaging projection which engages the engaging recess of the light guide member, the engaging projection which engages the engaging projection of the light guide member, and the engaging recess which engages the engaging projection of the light guide member.

15. The light source apparatus according to Claim 1, wherein the optical axes of the respective light source are directed in one axial direction of the virtual circle,
the incoming end of the light guide member reaches a portion facing the respective light sources,
the incoming end includes a triangle prism having an incoming end surface directed to face the respective light sources and a reflecting surface reflecting light incoming from the incoming end surface toward the center of the virtual circle, and
the supporting part receives the reflecting surface.
